# EUROPEAN PATENT SPECIFICATION

(11) **EP 1 256 250 B1**
(45) Date of publication and mention of the grant of the patent: **15.11.2006**
(21) Application number: 00906273.8
(22) Date of filing: 03.02.2000
(51) Int. Cl.: H04Q 7/38

(54) **LOCATION SYSTEM FOR MOBILE TELEPHONES AND METHOD OF PRESENTATION OF POSITION**
ORTUNGSSYSTEM FÜR MOBILTELEFONE UND POSITIONSANZEIGEMETHODE
SYSTEME LOCALISATION DESTINE A DES TELEPHONES MOBILES ET PROCEDE DE PRESENTATION DE LA POSITION

(30) Priority: 12.10.1999 EP 99120291
(43) Date of publication of application: 13.11.2002
(73) Proprietor: Sakarya, Taskin, 70825 Korntal-Münchingen (DE); Yazar, Aydin, 70435 Stuttgart (DE)
(72) Inventor: Sakarya, Taskin, 70825 Korntal-Münchingen (DE); Yazar, Aydin, 70435 Stuttgart (DE)
(74) Representative: Hössle Kudlek & Partner
(86) International application number: PCT/EP2000/000852
(87) International publication number: WO 2001/028271

(56) References cited:
- DE-A- 4 409 178
- US-A- 5 835 907
- US-A- 5 890 070

## Description

The present invention relates to a mobile telephone network system comprising a first plurality of radio communication antennas adapted to communicate using radio transmission with a second plurality of mobile stations, a method of operating such a mobile telephone network system and a mobile station to be used in such a mobile telephone network system.

A mobile telephone network system is known as established in accordance with the GSM/UMTS standards comprising Mobile Switching Subsystems (MSS), which are connected to each other and usually to a wired telephone network. Each Mobile Switching Subsystem (MSS) serves Base Station Subsystems (BSS) comprising Base Station Controllers (BSC), Base Transceiver Stations (BTS), and radio antennas, herein referred as transceivers (TRX), distributed over the service area of the mobile telephone network system. Sometimes extra hardware, for example amplifiers, attenuators, etc., are attached to the physical antenna and can form part of the transceiver. Each antenna serves a so-called cell. Antennas transmit at different frequencies so that signals from different antennas can easily be distinguished. Each antenna transmits continuously a Location Area Identification (LAI) and a Cell identity (CI) as well as other information in broadcast messages as within so called system information messages in Broadcast Channels (BCCH),

Each information sent between different subsystems, including between a mobile station (MS) and a base station subsystem (BSS), is called an Information Element (IE). A Local Area Identification (LAI) information element (IE) consists of six octets, each of 8 bits as 1 byte. The first octet is the LAI information Element Identifier (IEI), according to which the subsystem recognises the information as LAI, The second and third octet are the Mobile Country Code (MCC). The fourth octet is the Mobile Network Code (MNC). The fifth and sixth octet are the Location Area Codes (LACs). For example a complete LAI information element can be 13 40 F9 01 00 78, wherein "13" is the LAI IEI, "40 F9" is the MCC, for example country dialing code 49 as two octets, "01" is the network code, for example for the mobile network D1 in Germany, and "00 78" is the LAC. In the following, when LAI is referred often, this remain the same, only the LAC can be used. Otherwise other values need to be used too. Similarly, Cell Identity (CI) Information Element (IE) consists of three octets. The first octet is the CI information Element identifier (IEI). The second and third octet are the CI value. In the following, when CI is referred, this corresponds often to the CI value.

Document US 5 890 070 discloses a navigation apparatus using a radio communication device. When the radio communication device inputs a target place, it receives information of a radio control apparatus at the target place and those on the route from a database or a radio control apparatus. Upon reception of identification information of the radio control apparatus, the radio communication device compares it with the information of the radio control apparatus, and notifies the comparison result, thereby confirming its current position.

Document DE 44 09 178 shows a method for determining positions of mobile stations in mobile radio system. The positions of the mobile stations are determined by measuring their distances from base stations using one or more position coordinates of at least one base station during the position determination. The distances between the mobile stations and the base stations are determined by measuring the transition times of radio signals between them. The transition times are measured by determining the times for the radio signals to pass both ways between two stations. Alternatively, the distances can be derived from measured field strengths of received signals.

It is an object of the present invention to provide a more versatile mobile telephone network system, so that mobile stations can be used in a more versatile manner, a corresponding mobile station, and a corresponding method of operation of a mobile telephone network system. The versatility have to be under full control of the mobile station and its user, respectively. Preferably the versatility is provided without or with only little changes and/or extensions of the standards of the mobile telephone network.

The problem is solved by the invention as defined in the independent claims.

The problem is solved by a mobile telephone network system comprising a first plurality of radio communication antennas adapted to communicate using radio transmission with a second plurality of mobile stations, comprising localizing means for determining a geographical position of a mobile station, said localization means utilizing said radio transmission between at least one antenna of said first plurality of antennas and said mobile station, and output means at said mobile station for outputting said geographical position as plain text and/or by using a local map displayed by said output means. The problem is also solved by a corresponding mobile station and a corresponding method of operation of a mobile telephone network system.

The geographical information can be output in any appropriate manner at the mobile station, in particular displayed by display means or as an audio signal using computerized speech, for example by an audio-response unit. The geographical information can also be sent to the network administration and/or to calling or called subscriber of the telephone network, all under full control of the user of the mobile station.

The information about said geographical position can be independent from information specific to a user of said mobile station, in particular independent from a user-specific charging profile, distinguishing for example between user-specific areas as "home" or "home-city", and/or independent from a dialing code of said telephone network system (10).

The geographical position can be determined by using a Transmission Of Physical Location of Antennas (TOPLA), sent by said radio communication antennas, comprising a Geographical Area Name String (GANS) with a Location Area Name String (LANS) and a Cell Name String (CNS), and/or comprising geographical latitude and longitude coordinates of said serving cell and/or at least one neighbor cells, and by combining said Transmission Of Physical Location of Antennas (TOPLA) with field strength measurements and calculated via Geographical Area Name String Tables (GANST) and/or Geographical Area Map Position Table (GAMPT). The Transmission Of Physical Location of Antennas can be provided via system information (broadcast) messages, as part of location update procedures of the mobile station, and/or via Short Message Service Cell Broadcast (SMS-CB).

The geographical position can also be determined by using Mobile Based Location Translations (MBLT) of a Local Area Information (LAI) element, a Cell Identity Information (CI) element and/or a Timing Advance (TA) element, sent by said radio communication antennas and received by said mobile station, and by combining said Mobile Based Location Translations (MBLT) with mobile station serving cell and neighbor cell field strength measurements and calculated via Geographical Area Name String Table (GANST) and/or Geographical Area Map Position Table (GAMPT).

The information about the geographical position can be determined by using a Mobile Based Location Translation (MBLT) Assisted by Multiple Timing Advance (AMTA) parameters as sent by said radio communication antennas and received by said mobile station (MS1), and calculated via Geographical Area Name String Table (GANST) and/or Geographical Area Map Position Table (GAMPT). Alternatively or additionally said information about the geographical position can be determined by using Network Assisted Location Translations (NALT) in that the mobile station makes a network request for its geographical location by passing serving cell and neighbor cell field strength measurement and Timing Advance (TA) parameters and receive back the geographical location information from the network.

The information about the geographical position can be used as a city guide by referencing Geographical Area Information Table (GAIT) containing information for example about hotels, banks, shops, cinemas, advertisements, etc. in that geographical area such that the information can be output, for example displayed, at the mobile station upon request. Furthermore the information about the geographical position can be used as a pathfinder and/or an auto-navigator for the mobile station user, by determining and storing the position changes of the mobile station and by referencing Location Area Name String Tables (LANST), Cell Name String Tables (CNST), Geographical Area Name String Tables (GANST) and Geographical Area Maps (GAM) and guiding the mobile station user in the geographical area location.

Various embodiments of the invention can be seen in the accompanying figures, wherein
- Fig. 1: shows a schematic layout of a number of cells of the network system,
- Fig. 2: shows an arrangement of transceiver antennas,
- Fig. 3: shows an embodiment comprising two or more passive antennas for network assisted location translation,
- Fig. 4: shows the distribution of transceiver antennas together with a street map,
- Fig. 5: shows the mobile station displaying an extract of a city map,
- Fig. 6: shows a schematic view of various options displayed on the Mobile Station,
- Figs. 7A to 7C: show the determination of the geographical position 22 of the Mobile Station MS 1,
- Figs. 8A to 8D: show Geographical Area Maps GAMs,
- Fig. 9: shows an extract of the map of STUTTGART CENTRE,
- Figs. 10A to 10D: show the determination of the geographical position of the Mobile Station using Geographical Area Maps GAMs,
- Figs. 11A to 11C: show Geographical Area Information Tables (GAITs),
- Fig. 12: shows a typical Public Land Mobile Network (PLMN) architecture,
- Fig. 13: shows a more detailed schematic view of the Base Station Subsystem (BSS) of fig. 12
- Fig. 14: shows connection to external accessories for improved display and access to and/or from mobile station, and
- Fig. 15A to 15C: show a cross reference tables for path finder and auto-navigation.

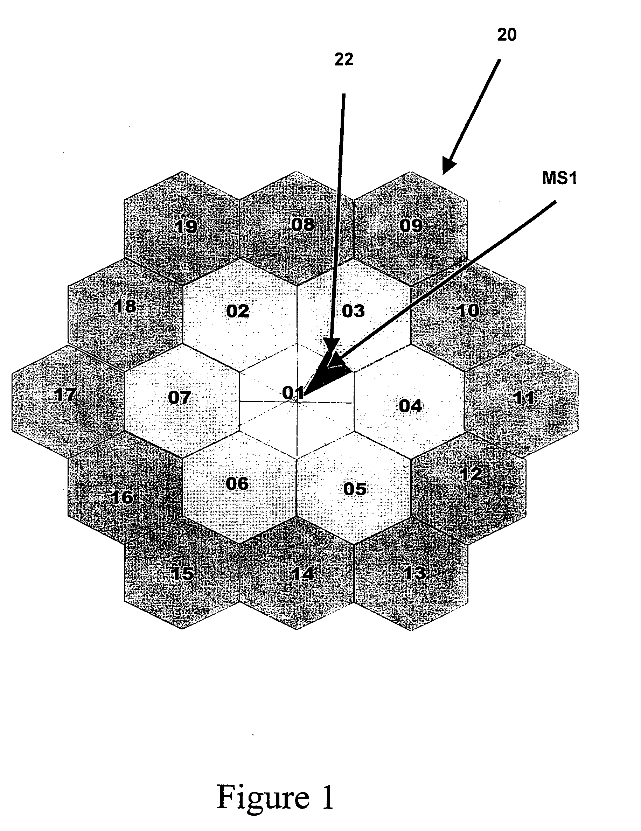

Fig. 1 shows a schematic layout of a number of cells 01, 02, ..., 19 of a mobile telephone network system 20, for example a Public Land Mobile Network (PLMN). Each cell 01, 02, ..., 19 being served by a transceiver antenna TRX. In the shown example, the centre cell 01 is the serving cell of a particular Mobile Station MS 1. The geographical position 22 of said Mobile Station MS1 is within the hatched section of the serving cell 01. The cells surrounding the serving cell 01 are neighbouring cells 02, ..., 19 for said serving cell 01.

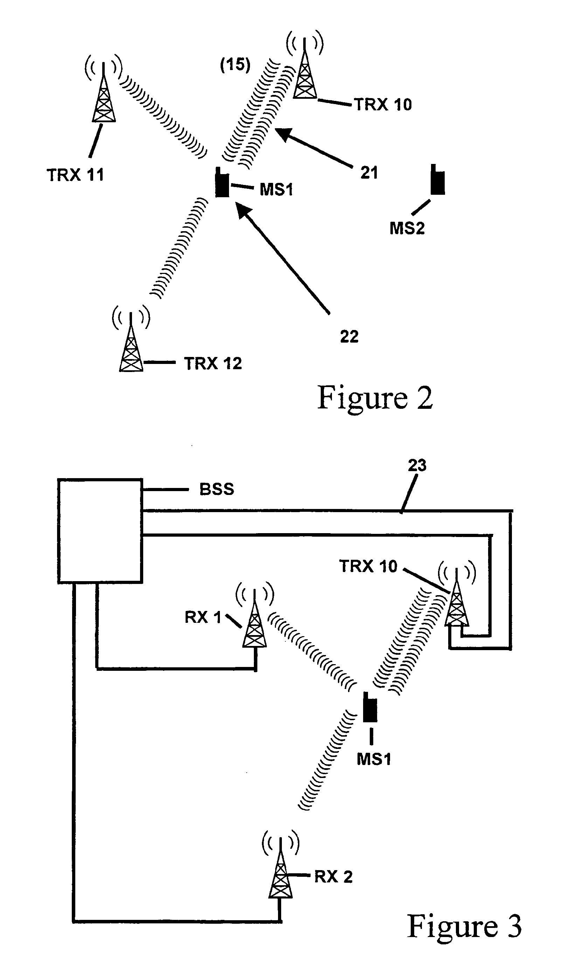

Fig. 2 shows an arrangement of transceiver antennas TRX 10, TRX 11 and TRX 12. For the determination of the geographical position 22 of the Mobile Station MS 1 localizing means in the Mobile Station MS 1 and/or the network system 20 are provided, utilizing the radio transmission 21 between at least one base transmission station transceiver antenna BTS-TRX 10 or TRX 10 of a first plurality of transceiver antennas TRX 10, TRX 11, TRX 12 and the Mobile_Station MS 1. The Mobile Station MS 1 receives, during a bi-directional communication, from the transceiver antenna TRX 10 of its serving cell 01 a Timing Advance TA_0 value which can be used as a parameter for the distance between Mobile Station MS 1 and transceiver antenna TRX 10. Furthermore Mobile Station MS 1 receives from the transceiver antenna TRX 10 of its serving cell 01 as well as from the transceiver antennas TRX 11 and TRX 12 of its neighbouring cells further information. This further information can simply be the received field strength and/or Local Area Information LAI or Cell Information Cl, encoded according to the provisions of the network provider or in clear form. Corresponding information is received by another Mobile Station MS 2 of a second plurality of mobile stations. In addition or in substitution, the Mobile Station MS 1 can also receive Timing Advance TA values from the transceiver antennas TRX 11 and/or TRX 12 of neighbouring cells via signalling using a bi-directional communication with the antennas TRX 11, TRX 12.

Fig. 3 shows an embodiment wherein two or more passive antennas RX 1, RX 2 for network assisted location translation are provided. The passive antennas RX 1 and RX 2 are only receiver antennas which are within the location area and connected with the base station subsystem BSS, preferably by wire 23. The receiver antennas RX 1, RX 2 receive signals from the Mobile Station MS 1 and/or the transceiver antenna TRX 10. The receiver antennas RX 1, RX 2 align themselves with transceiver antenna TRX 10, either via an air interface, i. e. received signals, or directly via the wired connections 23. The receiver antenna RX 1, RX 2 units can be able to calculate the Timing Advance TA value of the Mobile Station MS 1. The Timing Advance value TA_1 of receiver antenna RX 1 and TA_2 of receiver antenna RX 2 are passed to the Base Transceiver Station BTS of the transceiver antennas TRX 10 of the serving cell 01. The Timing Advance value TA_1, TA_2 can be forwarded to the Mobile Station MS 1 which can determine its geographical position 22 itself using TA_1 and/or TA_2. In this embodiment, Mobile Station MS 1 does not have to access transceiver antennas TRX 11, TRX 12 of neighbouring cells to get knowledge of further timing advance values TA, but the additional timing advance values TA are provided by the transceiver antenna TRX 10 of the serving cell 01 employing the passive antennas RX 1, RX 2. In addition or in substitution the transceiver antennas TRX 10 of the serving cell 01 can perform the position calculation and forward the results to the Mobile Station MS 1. Since the transceiver antenna TRX 10 receives the Timing Advance value TA₋1, TA_2 in knowledge of the distance to the providing receiver antennas RX 1, RX 2, it is simple for the transceiver antenna TRX 10 to calculate Geographical Area Name String GANS or Geographical Area Map Position GAMP and forward the results to the Mobile Station MS 1. The fixed distance between the transceiver antenna TRX 10 and the receiver antennas RX 1, RX 2 is for example larger than the resolution corresponding to timing advanced values according to given standards for the mobile network, for example 550 m or 137 m. Mobile to antenna distance parameter is defined as "Timing Advance" according to the GSM standards and presently has a resolution of about 550 m. This is the necessary value for GSM mobile station to network synchronisation. It is possible to increase the range of this parameter, for example by a factor of four, and so increasing the distance resolution to about 137 m or even less.

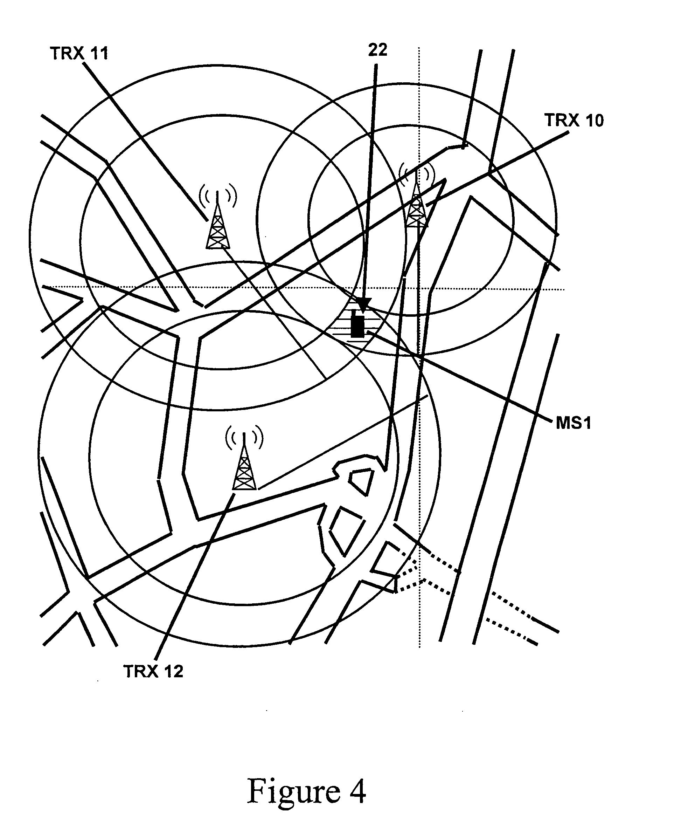

Fig. 4 shows the distribution of transceiver antennas TRX 10, TRX 11, TRX 12 together with a street map, partly showing the centre of Stuttgart, a town in the South of Germany. The geographical position 22 of the Mobile Station MS 1 is determined by the intersection of three circular rings or annulus on the basis of an analysis of timing advance values for the Mobile Station MS 1 and/or received field strength values received by the Mobile Station MS 1 and/or the network system 20. Similar results can be obtained by using only one transceiver antenna TRX 10 of the serving cell 01 and additional receiver antennas RX according to the embodiment shown in fig. 3. As can be seen from fig. 4, already the information of two transceiver antennas TRX 10, TRX 11 can be used for determining a geographical position but can be indefinite due to two different intersection areas resulting from an analysis of the information provided by the transceiver antennas TRX 10, TRX 11. It is also possible to use a receiver antenna RX for selecting the correct one of the two different intersections.

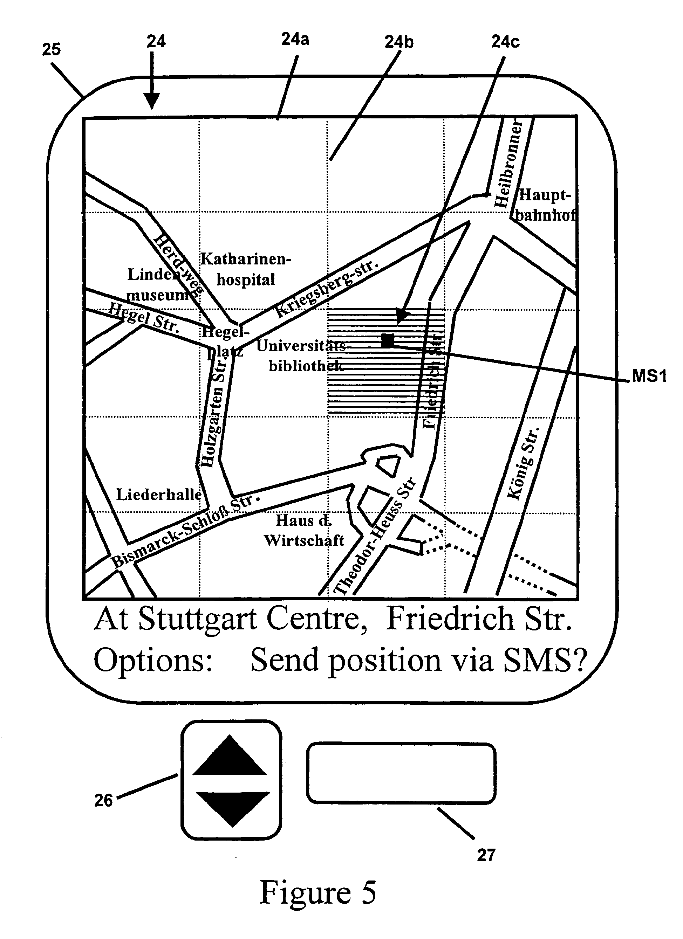

Fig. 5 shows the mobile station MS 1 displaying an extract of a city map comprising the street map shown in fig. 4 and additionally names and locations of characteristic buildings. The city map can be displayed on a display 25 of the mobile station MS 1 with an overlying grid 24 comprising equidistant orthogonal lines 24a, 24b. The field 24c comprising the geographical position 22 of the Mobile Station MS 1 can be marked on the display 25 in any appropriate manner. In addition or in substitution, the geographical position 22 can be displayed and one or various options can be offered to the user of the Mobile Station MS 1. The options can be selected for example by a touch sensitive means or by a rocker switch 26. The selected option can be activated for example by a further touch sensitive means or a button 27.

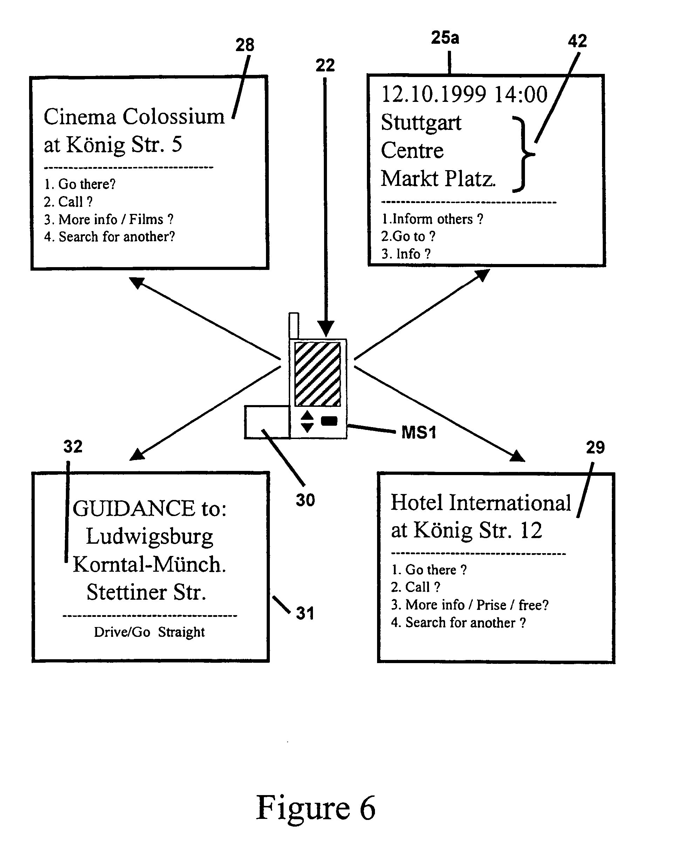

Fig. 6 shows a schematic view of various options displayed on the Mobile Station MS 1 according to the present invention. In the upper right corner is shown a display 25a comprising date and time as well as information 42 about the geographical location 22, which is in this example the market place in Stuttgart Centre, as a text string. Possible options for this display 25a are: 1. INFORM OTHERS?, 2. GO TO?, and 3. INFO?. INFORM TO OTHERS is a prompt for initiating a transmittal of the geographical location 22 to a receiver, for example to another mobile station as MS 2 in fig. 2. The transmittal of the geographical location 22 can be made via a message channel, for example via Short Message Service SMS. In addition or in substitution for example a voice call can be initiated, particularly in an emergency case.

The Mobile Station MS 1, if applicable in combination with the network system 20, is provided with an area background information module 30 which is only schematically indicated in fig. 6 and which contains background information, in particular comprising city guide information, about at least one geographical area and is accessible via the geographical location 22 of the mobile station MS 1. In other words, the area background information module 30 can be used so as to display location dependent information, that is information which is received only by mobile stations which are located in a specific geographical area. The background or city guide information can be the same for all mobile station MS 1, for example can comprise all information available, or can be specific for a user of the mobile station MS 1 according to a user information profile.

There are shown two options which are possible using the area background information module 30. In the upper left corner, there is shown a search location 28, namely a cinema COLOSSIUM at a certain address KOENIG STR. 5. In the lower right corner, there is shown a further search location 29, namely a hotel INTERNATIONAL at the address KOENIG STR. 12. In both cases, information about the cinema and the hotel, respectively, have been transmitted via a message channel (e.g. SMS) to all mobile stations which are in the particular geographical area of that cinema and hotel, continuously or on request, respectively. This type of advertising can be made interactive by the user of the mobile station MS 1. A prompt could invite to call or to ask for certain information about the search locations 28, 29, respectively.

Another module that is implemented in the network system 20 and the mobile station MS 1 is a location or path finder module 31 which is schematically indicated in fig. 6 at the lower left.

If the owner of the mobile station MS 1 wants to go to a certain search location, like the search location "STETTINER STRASSE 10" 32, the location finder module 31 will show the direction where to go. Namely, the location finder module 31 has access to location lists and tables and/or maps and/or city guide information, including for example street maps, subway train schedules, etc., about a geographical area and is capable to assist the user of the mobile station MS 1 in finding the search location 32 in said geographical area. The search location can be either searched via a search option corresponding to the upper right corner of Fig. 6, or can be directly entered via the keys (not shown) of the mobile station MS 1. The search location can be selected from a given list of countries, cities, location areas and streets. The location finder module 31 knows the geographical location 22 of the mobile station MS1, and, via access to location tables and/or maps and/or city guide information, knows where the search location is located. A navigational algorithm implemented in the location finder module will calculate the direction to go from the location of the mobile station and indicate this direction on the mobile station display 25. For this purpose, the mobile station can comprise further a compass. In a refinement, the user is shown streets which he has to take in order to arrive at the search location 32. Such option is possible via access to map information.

If the mobile station for example searches a location within the same location area, the street list is displayed. The selected street and its cell is registered. An own-cell to destination-cell cross reference list 28 is available to the mobile station MS 1. This cross reference list gives the sequence of cells to be crossed to arrive at the required destination. Movements from one cell to the next cell is stored. If the taken direction is not correct, then the next destination-cell measurement shall weaken instead of getting stronger. In this case a warning shall be given at the mobile station MS 1. Similarly correct directions shall be displayed.

If the mobile station MS 1 searches a location within another location area, first a location area list can be displayed. The selected location area is registered. In an own-cell to another location area cross reference list 29 the sequence of cells to be crossed to the next location area to cross is given.

When the next location area is reached, the own-cell to location-area cross reference list is referenced again, and so on, until the final location area is reached. At the destination location area again own-cell to destination-cell cross reference list or table is referenced to bring the mobile station MS 1 to its final destination.

Similarly in cases wherein another city or country is required, a new cross reference list or table is required, where own-cell to cities/countries are listed with the sequence of location areas to cross. The destination is to be selected only once. Mobile station MS 1 stores this information and uses it against different location matrixes and/or cross-reference tables during the navigation of the mobile station MS 1.

Generally, there are two different approaches (a) and (b) of implementing the invention and the optional modules in an existing network system like the GSM system.

In the first possibility (a), the mobile station MS is itself equipped and capable of translating received regular network system location area information to a location information within the meaning of the invention, e.g. a string of characters relevant to the geographical location. Further, if the mobile station is suitable to use the SMS, the mobile station itself may send the location information via the SMS channel, optionally with fast key combinations. Also, background information and map information could be stored in the mobile station only, e.g. permanently (what might be difficult if a large geographical area has to be accessed), or only for a certain period of time.

Preferably, the map information is implemented by translation tables, as indicated below. The translation tables refer to Local Area Information (LAI) values. These values are reserved and allocated per administration base of the network system. Their corresponding geographical locations are also in the responsibility of those administrators.

Conclusively, information like translation tables "LAI + additional information vs. location string (e.g. KOENIG STREET)" is to be obtained and updated with each update of the network plan and distributed to mobile equipment. Due to possibly many updates, it might be difficult to maintain a one time load of these tables into the mobile equipment's. Beside, it might be difficult to maintain a wide area, i.e. country-wide, US-wide, worldwide etc. Therefore, it might be best to have optional additional plug-in cards (similar to SIM cards) which can be distributed and updated via the administrator. The same type of plug-in card can be used for the background Information and the map information. According to this approach, if only the mobile station MS 1 is adapted according to the present invention, implementation of the present invention can be made at relatively low cost.

On the other hand, a more global approach (b) can be achieved if location strings corresponding to the related LAIs are kept locally by the Base Station Controllers BSCs and other related info by the Base Transceiver Stations BTSs, so that there is no need anymore to store the "LAI + other information vs. location string" tables within the mobile station. This approach requires a global update of the radio communication link, the air interface and the corresponding standards, for example GSML3 specifications for Mobility Management. It enables, however, a world-wide use of the feature without any restriction. Normally, BTSs need to have simply a new database parameter for the TRX antenna location string. This location information shall be broadcasted from Broadcast Channels BCCHs, indicating the exact location of the antennas for each cell. Such that upon camping on the cell, the mobile equipment shall read the location string from the broadcast channels system info. The mobile station needs further to do measurements on the other cells as usual and depending on different signal strength levels to determine the exact location. The mobile station optionally can give this location information back to the system with an extra parameter indicating the type of request, upon which the related data can be given to the mobile station as SMS messages or via a short connection.

Depending on the location updates made by the mobile station MS 1 at a given time period and the direction request for example, it shall be possible by the system (or by the own memory chip of the mobile station) to determine the best possible route for the travelling mobile owner. An information download can also take place as part of the location update procedures, immediately following a successful location update before the dedicated channel gets released.

In summary, location information is available to a mobile station via five possible sources
(i) board plug-in location information 42 module (local, nation-wide, world-wide info depending on the availability and memory capacity and "resolution");
(ii) reception of location information 42 from the network system 20 via system info (BSS) which is free to use; no telephone calls are necessary;
(iii) reception of location information 42 from the network system 20 via info downloads as part of location update procedures, which is free use; no telephone calls are necessary;
(iv) reception of the location information 42 from the system 20 via SMS-CB; free use; no telephone calls are necessary;
(v) reception of the location information 42 from an info centre (Internet or network system 20 centre) via call connect.

Further, background information is available to the mobile station via similar five possible sources:
(i) board plug-in city guide information module (local, nation-wide, world-wide info depending on the availability and memory capacity);
(ii) similar as in the case of location information 42 (ii);
(iii) reception of background information 42 from the system via SMS-CB; free use; no telephone calls are necessary; the download is made to a plug-in memory module; although SMS-CB is not something new, a selective filtering by BSS is offered, so that not a lot of unsorted SMS broadcasts but instead filtered date are stored; filtering SW at BSS separates the SMS broadcast data depending on the geographical position 22 of the mobile station MS 1, and then transmit them separately to different locations;
(iv) reception of the background information from an info centre (Internet or network system 20 centre) via call connect; the download of a city guide can be done only once; the local memory of the mobile station MS 1 shall store the data for future use;
(v) similar to (iv), except only the requested information is transferred by the info site upon request and not the complete download.

Finally, map information is available to the mobile station via five possible sources:
(i) board plug-in map information (street matrix tables) info modules (local, nation-wide, world-wide info depending on the availability and memory capacity and "resolution") and related advance programs;
(ii) reception of the map information from the network system 20 via info downloads as part of location update procedures; free use; no telephone calls are necessary; a mobile local advance location processing programming is needed;
(iii) reception of the map Information from the system via SMS-CB, for example into a plug-in memory module;
(iv) reception of the map information from an info centre (Internet or network system 20 centre) via call connect; the download can be done only once and the information is stored in the mobile station MS 1 for future use;
(v) similar to (iv), except that only the requested information is transferred by the info centre upon request and not the complete download.

As can be seen from above, it can be advisable to combine both alternatives (mobile station amendment only on the one hand (a) and global solution on the other hand (b)) into a more powerful access. That is, one may combine plug-in modules, plug-in memories and the use of broadcasted system information from network system 20, the use of broadcasted SMS information from network system 20, the use of location update procedures for download, the use of special purpose calculation sites (possibly Internet or other new dedicated centres, such as personal traffic guidance systems) can be combined. It can be understood that in case of amending the mobile station MS 1, it shall be preferred to add to the mobile station display 25 and keyboard 26, 27 connectivity so as to facilitate the handling thereof.

Depending on the update history versus time stamps, it shall be possible for a BSS and/or an Network Subsystem NSS to determine if the user of the mobile station MS 1 is travelling by car or on foot. This information can also be determined by the type of cell being camped on, i.e. large cell, small cell or micro cell. The Cell Name String CNS can be transmitted via system info broadcasts or via location update requests, as appropriate.

It is to be understood that the mobile station hardware needs to be updated if plug-in modules are to be inserted. It is preferred if two optionally removable plug-in modules can be inserted, (i) a module for map information, location information, and/or background information, and (ii) a memory module.

The software of the mobile station MS 1 can be updated as follows:
(i) The user menu can be updated, to allow location information SMS sending with short keys or key combinations, to a user predefined telephone number or group of numbers;
(ii) a program which accesses the translation tables with the mobile cell/channel measurements and other available information, and outputs a string (for example "STUTTGART MARKTPLATZ"), ready for SMS sending to a predefined number;
(iii) a program which makes it possible to do fast access and download of certain Internet or network system 20 info site mobile tables into a memory area of the mobile station. The data is kept even at power off, until new replacing data is downloaded;
(iv) a program which makes it possible to store received SMS data tables in a categorized order into the memory area and keep the data until next update; and
(v) a program which outputs direction guiding messages based on location information and the received search location. This program should accept inputs as streets, area names or info sites such as hotels, banks, public service areas, cinemas etc.

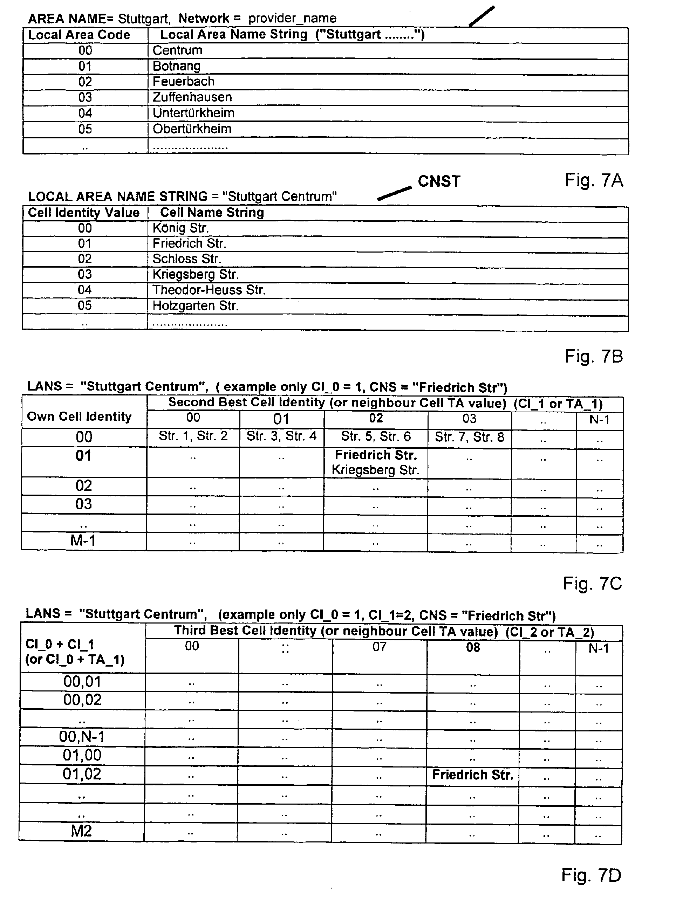

Figs. 7A to 7C show the determination of the geographical position 22 of the Mobile Station MS 1. This determination is based on translation tables translating encoded data in plain text.

In fig. 7A a Local Area Name String Table LANST is shown for the area STUTTGART, wherein the relation between the local area code 0, 1, ... and the local area name string LANS is dependent from and has to be provided by the provider of the mobile telephone network system 20. The area name is STUTTGART. The local area code "0" corresponds to the local area name string "STUTTGART CENTRE", local area code "1" corresponds to "STUTTGART BOTNANG", etc..

Fig. 7B shows a Cell Name String Table CNST, wherein the relations between Cell Identity Cl values and the Cell Name String CNS according to the definition of the network provider are laid down. For the example shown in fig. 2, the cell identity value of the transceiver antenna TRX 10 of the serving cell 01 received by the Mobile Station MS 1, in other words the best cell identity Cl_0, is "1 " which corresponds to the location "FRIEDRICH STR..".

Fig. 7C shows a first cross matrix table corresponding to an additional measurement. In this first Cross Matrix Table CMT 1 for the best Cell Identity Cl_0 the value 1 is assumed, or more exactly 01 or 00 01, corresponding to the cell name string "FRIEDRICH STR.", where the corresponding TRX is located. The second best cell identity Cl_1 and/or the second best neighbour cell Timing Advance value TA_1 is assumed to be 2 or 02. In CMT 1 "FRIEDRICH STR." and "KRIEGSBERG STR." are listed for "Cl_0, Cl_1" = "01, 02". Analysing this information using the first Cross Matrix Table CMT 1 indicates for the geographical position 22 of the Mobile Station MS 1 being "FRIEDRICH STR." or "KRIEGSBERG STR.", according to the corresponding field in CMT 1 referencing to best cell identity value CI_0 = 01 for the serving cell and cell identity value 02 for the second best cell identity value CI_1.

Fig. 7D shows a second Cross Matrix Table CMT 2 wherein as a further information the third best identity value CI-2 and/or the third neighbour cell timing advance value TA_2 is used. In the shown example CI_2 is "08". Using this additional information results in a more definite information 42 for the geographical position 22 of the mobile station MS 1 being "FRIEDRICH STR.".

As can be seen from figs. 7A to 7D the Numbers N, M for the cell identity values and the combination of cell identity values can be varied according to the requirements and/or standards. For example N=32 is possible if the table is based on next best cell. N =64 is possible if the table is based on GSM timing advance standard up to standard large cells and N =219 for including extended large cells. If the table is based on higher resolution timing advance, N = 64x4 or 219x4 is possible. For M, 256 can be the maximum value, however the table may consist of only the available cell identities.

Further cross matrix tables resulting in further levels can be used corresponding to the number of additional measurements. It is obvious that the higher the level, the better the accuracy and resolution, but the larger the GANST. The available highest level matrix table can be accessed directly to receive the information needed.

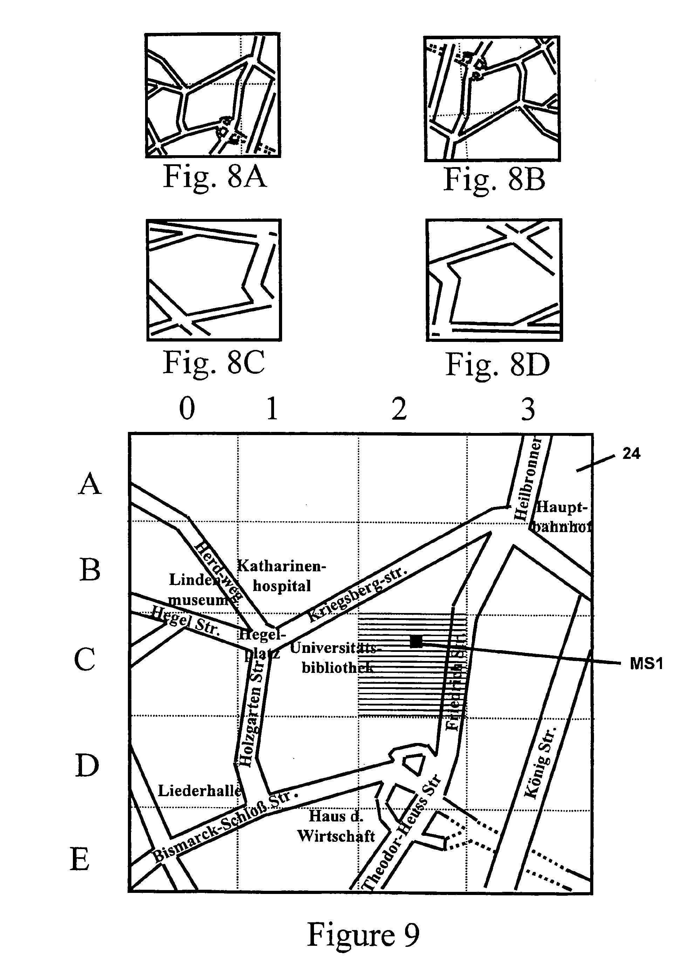

Figs. 8A to 8D show Geographical Area Maps GAMs. Two types of GAMs can be used and displayed on the Mobile Station MS 1, namely location area GAM, as shown in figs. 8A and 8B, and cell GAM, as shown in figs. 8C and 8D, as a zoomed version of location area GAM of fig. 8B. The fig. 8A shows a location area GAM for a local area code = 00, corresponding to SUTTGART CENTRE. Fig. 8B shows a location area GAM for local area code = 01, corresponding to STUTTGART-BOTNANG according to fig. 7A. Fig. 8C shows an enlarged or zoomed section of the location area shown in fig. 8C, identified by the cell identity value = 01. The fig. 8D shows a different enlarged section of the location area shown in fig. 8B, identified by the cell identity value = 02. Further detailed maps can be provided and displayed at the Mobile Station MS 1.

Fig. 9 shows an extract of the map of STUTTGART CENTRE using the grid already shown in fig. 5. Each field defined by the grid can be identified by a combination of one of the letters A to E, corresponding to a row respectively, and one of the numbers 0 to 3, corresponding to a column respectively.

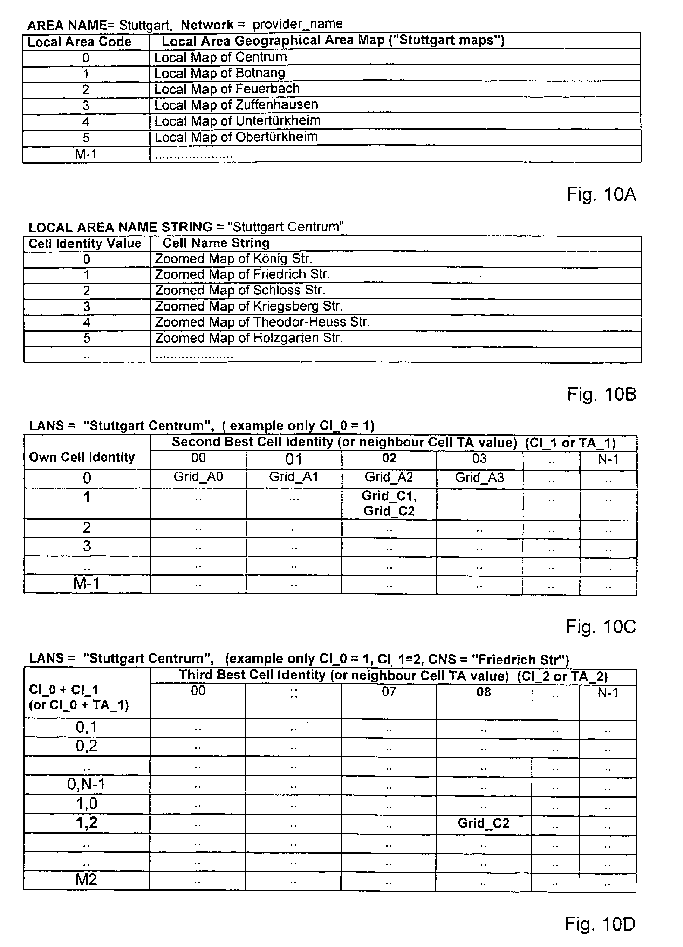

Figs. 10A to 10D show the determination of the geographical position 22 of the Mobile Station MS 1 using Geographical Area Maps GAMs. Similar as described with figs. 7A to 7D, the field C2 corresponding to the geographical position 22 of the Mobile Station MS 1 can be identified using local area GAM for STUTTGART CENTRE as shown in fig. 10A, cell area GAM for FRIEDRICH STR. as shown in fig. 10B. A first cross matrix table CMT 1 as shown in fig. 10C and a second cross matrix table CMT 2 as shown in fig. 10D result in marking field C2 on the display 25 of the mobile station MS 1. Comparing figs. 7A to 7D with figs. 10A to 10D, a difference is, that instead of position name strings as in figs. 7A to 7D, in figs. 10A to 10D fields within the grid 24 are referenced. Furthermore geographical area maps GAM on all corners have latitude and longitude values. If for example, Network Assisted Location Translation (NALT) returned latitude and longitude for the geographical position 22, an additional table has to be provided and referenced to convert the latitude and longitude values to corresponding grid field reference.

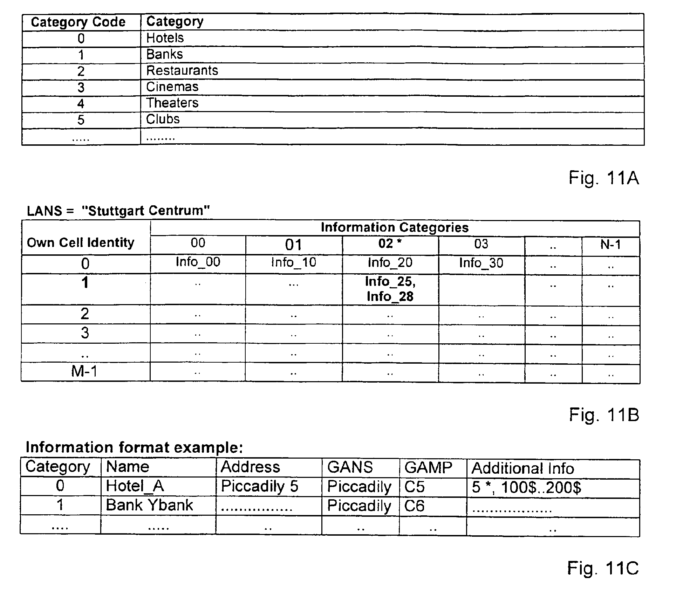

Figs. 11A and 11B show geographical area information tables GAITs. In fig. 11A various categories as "HOTELS", "BANKS", "RESTAURANTS", ... are referenced by a category code "00", "01", ..., respectively. Fig. 11B shows a table linking the information category for the serving cell 01 of the Mobile Station MS1. In the shown example, this table provides for the service cell having cell identity value 1 in the category "RESTAURANTS", corresponding to category code 02, the information "info_25" and "info_28". N is the number of information categories and M=256 is the maximum value for cell identity value, however the table may consist of only the available cell identity. The requested information, selected by category code, is searched within the column of the given categories, wherein at first the information within the serving cell 01 is displayed. If appropriate or desired in the following the information within the neighbouring cells 02, ..., 19 can be displayed.

As shown in Fig. 11C, for example for the category "0" corresponding to "HOTELS", apart the information of the name, address, geographical area name string and/or geographical area map position; additional information as for example number of rooms, price, etc. can be provided. For another category, for example with category "1" corresponding to "BANKS", additional information as for example opening hours can be provided.

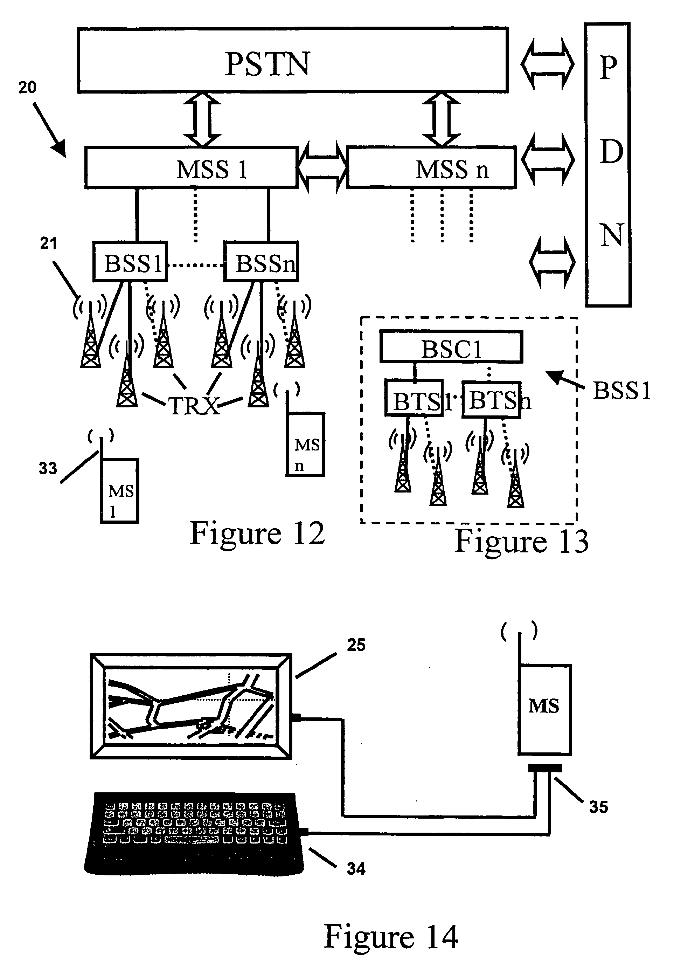

Fig. 12 shows a typical mobile telephone network system 20 comprising at least one, generally several Mobile Switching Subsystems MSS 1 to MSS n which can be connected among themselves. The network system 20 can be further connected with a Public Switched Telephone Network PSTN and a Public Data Network PDN, as for example the Internet. Each mobile station subsystem MSS 1 is connected with at least one, generally several of Base Station Subsystems BSS 1 to BSS n. Each base station subsystem BSS 1 is connected with at least one, generally a first plurality of antennas TRX. Each of the antennas TRX is fixed and earth-based and is capable of transmitting and receiving via a radio communication transmission 21. The antennas TRX are distributed over a certain mobile service area of the network system 20. A second plurality of mobile stations MS 1 to MS n is adapted to communicate using radio transmission 21 with any of the antennas TRX. For this purpose, each mobile station MS 1 comprises an antenna 33.

The terms MSS, BSS etc. of the present network system 20 have been adopted from the terminology of the known Global System for Mobile communications (GSM) system in order to facilitate understanding of the present invention. However, the present invention is not limited to particular GSM architecture and terminology.

Each mobile station MS 1 can receive signals from a selected group of antennas TRX. The illumination of the antennas TRX generally overlaps each other so that a mobile station MS 1 can travel through the mobile telephone service area without interruption of pending calls. In order to achieve this, the network system 20 establishes a certain organisational structure which can be the same or comparable to that of the GSM system.

Fig. 13 shows a more detailed schematic view of the Base Station Subsystem BSS 1 of fig. 1 comprising a Base Station Controller BSC 1 which is connected to a plurality of Base Transceiver Stations BTS 1 to BTS n. Each BTS is typically assigned to one specific geographical location, for example on the top of a high building, and comprises at least one, typically two or more, for example three, antennas TRX which are directed in different directions. Each of the antennas TRX associated to a single BSC transmits and receives at a different frequency in order to facilitate identification of the antenna TRX and the cells established thereby. As can be seen from fig. 12 the MSS and/or the BSS can have access to the PDN, for example the Internet, via an according gateway.

Fig. 14 shows connections of external accessories for improved display and access to and/or from mobile station MS 1. An external and for example portable display 25 can be used as additional output means, and/or a for example portable keyboard 34 can be used as additional input means for the mobile station MS 1. External input 34 and output 25 means can be connected to the mobile station MS 1 via a wired or wireless, for example infrared, interface 35. In addition or in substitution, further input and/or output means can be connected to the mobile station MS 1 and also combined input and output means as for example touch sensitive screen or voice recognition systems.

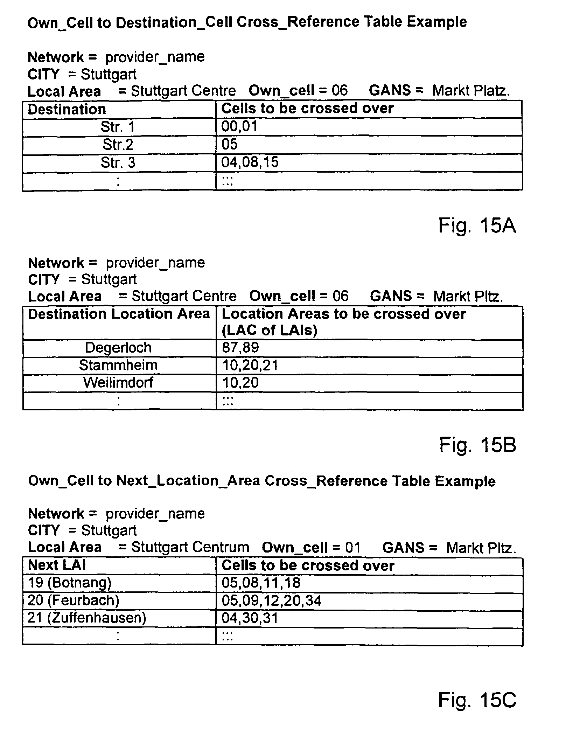

Fig. 15A to 15C show the cross reference tables for path finder and auto-navigation. Fig. 15A shows an own-cell to destination-cell cross reference table. Local area is STUTTGART CENTRE, own-cell has cell identity value 06 and Geographical Area Name String is MARKTPLATZ. For the destination STR.1 the "cells to be crossed over" are 00, 01. For example, for the destination STR.1 = KRIEGSBERGSTR., as shown in fig. 9, the cells to be crossed over could be KOENIGSTR. and subsequently FRIEDRICHSTR., in accordance with fig. 7B.

Fig. 15B shows the own-cell to destination-location-area cross reference table. For the local area with the Local Are Name String STUTTGART CENTRE, own cell with cell identity value 06, and Geographical Area Name String MARKTPLATZ, for various destination location areas the location areas to be crossed over are referenced by their Local Area Identifications LAI. For example for the destination location area DEGERLOCH the location areas with location areas identifications 87 and subsequently 89 have to be crossed.

Fig. 15C shows an own-cell to next-location-area cross reference table wherein the sequence of cells to be crossed to the next location area to be crossed is referenced, starting from STUTTGART CENTRE, own-cell value 06 and GANS MARKTPLATZ. For example for reaching the next location area with LAI 19 corresponding to BOTNANG, cells 05, 08, 11, and 18 have to be crossed over. When the next location area is reached, this table is updated until the final location area is reached.

## Claims

1. A mobile telephone network System (20) comprising a first plurality of radio communication antennas (TRX 10, TRX 11, TRX 12) adapted to communicate using radio transmission (21) with a second plurality of mobile stations (MS 1, MS 2), comprising localizing means (MBLT; NALT; NALT ARX) for determining a geographical position (22) of a mobile station (MS 1), said localizing means (MBLT; NALT; NALT_ARX) utilizing said radio transmission (21) between at least one antenna (TRX 10) of said first plurality of antennas (TRX 10, TRX 11, TRX 12) and said mobile station (MS 1), and output means (25) at said mobile station (MS 1) for outputting an information (42) corresponding to said geographical position (22) as plain text or by using a local map displayed by said output means (25),
said geographical position (22) is calculated by said mobile station (MS 1)
by using field strength measurement means comprised within said mobile station (MS 1) for measuring received field strengths of a radio communication antenna (TRX 10) of a serving cell (01) and of at least one radio communication antenna (TRX 11) of a neighbor cell (03) adjacent to said serving cell (01), and
**characterized in that**
said network system (20) further comprises Assisting Receiver Antennas (RX 1, RX 2) as extra receiver only antennas for measuring Timing Advance (TA) parameters of said mobile station (MS 1),
wherein the Timing Advance (TA) parameters are measured using the Assisting Receiver Antennas (RX 1, RX 2) in order to be able to determine the geographical position (22) of the mobile station (MS 1) by said mobile station (MS 1),
wherein the geographical position (22) is calculated by said mobile station by using Timing Advance values given by the extra Assisting Receiver Antennas (RX 1, RX 2).

2. System of claim 1, **characterised in that** said information (42) about said geographical position (22) is independent from information specific to a user of said mobile station (MS 1) and independent from a dialing code of said telephone network system (20).

3. System of one of claims 1 or 2, **characterized in that** Geographical Area Name String Tables (GANST) and/or Geographical Area Map Tables (GAMT) are loadable into said mobile station (MS 1) by at least one network service call, or are made available by a plug-in memory module to said mobile station (MS 1).

4. System of one of claims 1 to 3, **characterized in that** said information (42) about said geographical position (22) can be sent by said Mobile Station (MS 1) via Short Message Service (SMS), periodically, automatically on a predetermined event, and/or manually, as calling, and/or as called Geographical Area Name String (GANS).

5. System of one of claims 1 to 4, **characterized in that** said information (42) about said geographical position (22) can be sent by said Mobile Station (MS 1) via a normal telephone call set up procedure as calling and/or as called Geographical Area Name String (GANS), in addition or substitution of a presentation of calling and called number service.

6. System of one of claims 1 to 5, **characterized in that** said information (42) about said geographical position (22) is used as a path finder and/or auto-navigator service for a user of said Mobile Station (MS 1) comprising means for determining and storing position changes of said Mobile Station (MS 1) referencing Location Area Name String Tables (LANST), Cell Name String Tables (CNST), Geographical Area Name String Tables (GANST) and/or Geographical Area Map Tables (GAMT) and means for guiding said user of said Mobile Station (MS 1).

7. A method of operation of a mobile telephone network system (20) comprising a first plurality of radio communication antennas (TRX 10, TRX 11, TRX 12) adapted to communicate using radio transmission (21) with a second plurality of mobile stations (MS 1, MS 2), comprising localizing means (MBLT; NALT; NALT_ARX) for determining a geographical position (22) of a mobile station (MS 1), said localizing means (MBLT; NALT; NALT_ARX) utilizing said radio transmission (21) between at least one antenna (TRX 10) of said first plurality of antennas (TRX 10, TRX 11, TRX 12) and Said mobile station (MS 1), and output means (25) at said mobile station (MS 1) for outputting an information (42) corresponding to said geographical position (22) as plain text or by using a local map displayed by said output means (25), said geographical position (22) is calculated by said mobile station (MS 1)
by using field strength measurement means comprised within said mobile station (MS 1) for measuring received field strengths of a radio communication antenna (TRX 10) of a serving cell (01) and of at least one radio communication antenna (TRX 11) of a neighbor cell (03) adjacent to said serving cell (01), and **characterized in that**
said network system (20) further comprises Assisting Receiver Antennas (RX 1, RX 2) as extra receiver only antennas for measuring Timing Advance (TA) parameters of said mobile station (MS 1),
wherein the Timing Advance (TA) parameters are measured using the Assisting Receiver Antennas (RX 1, RX 2) in order to be able to determine the geographical position (22) of the mobile station (MS 1) by said mobile station (MS 1),
wherein the geographical position (22) is calculated by said mobile station by using Timing Advance values given by the extra Assisting Receiver Antennas (RX 1, RX 2).

8. A mobile station (MS 1) of a mobile telephone network system (20) comprising a first plurality of radio communication antennas (TRX 10, TRX 11, TRX 12) adapted to communicate using radio transmission (21) with a second plurality of mobile stations (MS 1, MS 2), comprising localizing means (MBLT; NALT; NALT_ARX) for determining a geographical position (22) of said mobile station (MS 1), said localizing means (MBLT; NALT; NALT_ARX) utilizing said radio transmission (21) between at least one antenna (TRX 10) of said first plurality of antennas (TRX 10, TRX 11, TRX 12) and said mobile station (MS 1), and output means (25) at said mobile station (MS 1) for outputting an information (42) corresponding to said geographical position (22) as plain text or by using a local map displayed by said output means 25),
said geographical position (22) is calculated by said mobile station (MS 1)
by using field strength measurement means comprised within said mobile station (MS 1) for measuring received field strenghts of a radio communication antenna (TRX 10) of a serving cell (01) and of at least one radio communication antenna (TRX 11) of a neighbor cell (03) adjacent to said serving cell (01), and **characterized in that**
said network system (20) further comprises Assisting Receiver Antennas (RX 1, RX 2) as extra receiver only antennas for measuring Timing Advance (TA) parameters of said mobile station (MS 1) ,
wherein the Timing Advance (TA) parameters are measured using the Assisting Receiver Antennas (RX 1, RX 2) in order to be able to determine the geographical position (22) of the mobile station (MS 1) by said mobile station (MS 1),
wherein the geographical position (22) is calculated by said mobile station by using Timing Advance values given by the extra Assisting Receiver Antennas (RX 1, RX 2).

## Patentansprüche

1. Mobiltelefonnetzsystem (20) mit einer ersten Mehrzahl von Kommunikationsfunkantennen (TRX10, TRX 11, TRX 12), die zur Kommunikation mit einer zweiten Mehrzahl von Mobilstationen (MS 1, MS 2) durch Funkübertragung (21) geeignet sind, mit einem Lokalisierungsmittel (MBLT; NALT; NALT ARX) zur Bestimmung einer geographischen Position (22) einer Mobilstation (MS 1), wobei das Lokalisierungsmittel (MBLT; NALT; NALT ARX) die Funkübertragung (21) zwischen mindestens einer Antenne (TRX 10) der ersten Mehrzahl von Kommunikationsfunkantennen (TRX10, TRX 11, TRX 12) und der Mobilstation (MS 1) benutzt, und einem Ausgabemittel (25) an der Mobilstation (MS 1) zur Ausgabe einer Information (42) in Klartext entsprechend der geographischen Position (22) oder durch eine örtliche Karte, die von dem Ausgabemittel (25) angezeigt wird, wobei die geographische Position (22) von der Mobilstation (MS 1) durch Feldstärkenmessmittel in der Mobilstation (MS 1) bestimmt wird, um empfangene Feldstärken einer Kommunikationsfunkantenne (TRX 10) einer dienenden Funkzelle (01) und mindestens einer Kommunikationsfunkantenne (TRX 11) einer benachbarten Funkzelle, angrenzend an die dienende Funkzelle, zu bestimmen,
und **dadurch gekennzeichnet, dass**
das Mobiltelefonnetzsystem (20) unterstützende Empfangsantennen (RX 1, RX 2) als zusätzliche nur-empfangende Antennen zur Bestimmung von Parametern für einen Vorlauf (TA) der Mobilstation aufweist,
wobei die Parameter für den zeitlichen Vorlauf (TA) durch die unterstützende Empfangsantennen (RX 1, RX 2) gemessen werden, um der Mobilstation (MS 1) zu ermöglichen, die geographische Position (22) der Mobilstation (MS 1) zu bestimmen, wobei die geographische Position (22) von der Mobilstation mit zeitlichen Vorlaufwerte berechnet wird, die von den zusätzlichen unterstützenden Empfangsantennen (RX 1, RX 2) gegeben werden.

2. System nach Anspruch 1, **dadurch gekennzeichnet, dass** die Informationen (42) über die geographische Position (22) von den für einen Bediener spezifischen Informationen der Mobilstation (MS 1) und von einer Vorwahlnummer des Telefonnetzsystem (20) unabhängig sind.

3. System nach einem der Ansprüche 1 oder 2, **dadurch gekennzeichnet, dass** Zeichen- bzw. Kettentabellen von geographischen Zonenamen (GANST) und/oder Kartentabellen von geographischen Zonen (GAMT) in die Mobilstation (MS 1) durch mindestens einen Netzwerkdienstanruf ladbar sind oder für die Mobilstation (MS 1) durch einen Speichereinschubmodul zugänglich gemacht sind.

4. System nach einem der Ansprüche 1 bis 3, **dadurch gekennzeichnet, dass** die Informationen (42) über die geographische Position (22) von der Mobilstation (MS 1) über Kurznachrichtendienst (SMS), periodisch, automatisch bei einem vorbestimmten Ereignis und/oder von Hand, als rufende und/oder gerufene Ketten von geographischen Zonenamen (GANS) geschickt werden können.

5. System nach einem der Ansprüche 1 bis 4, **dadurch gekennzeichnet, dass** die Informationen (42) über die geographische Position (22) von der Mobilstation (MS 1) über einen normalen Anrufkonfigurationsablauf als rufende und/oder gerufene Ketten von geographischen Zonenamen (GANS) geschickt werden können, zusätzlich zu oder im Ersatz einer Darstellung von rufendem und gerufenem Nummerdienst.

6. System nach einem der Ansprüche 1 bis 5, **dadurch gekennzeichnet, dass** die Informationen (42) über die geographische Position (22) als einen Wegfinder und/oder einen automatischen Navigationsdienst für einen Nutzer der Mobilstation (MS 1) benutzt werden, mit Mitteln zur Bestimmung von Positionsänderungen der Mobilstation (MS 1) und Mitteln zur Ablage der Positionsänderungen der Mobilstation (MS 1) bezüglich Kettentabellen von Ortzonenamen (LANST), Kettentabellen von Zellenamen (CNST), Kettentabellen von geographischen Zonenamen (GANST) und/oder Kartentabellen von geographischen Zonen (GAMT), und mit Mitteln zur Leitung des Nutzers der Mobilstation (MS 1).

7. Verfahren zur Bedienung eines Mobiltelefonnetzsystem (20), mit einer ersten Mehrzahl von Kommunikationsfunkantennen (TRX10, TRX 11, TRX 12), die zur Kommunikation mit einer zweiten Mehrzahl von Mobilstationen (MS 1, MS 2) durch Funkübertragung (21) geeignet sind, einem Lokalisierungsmittel (MBLT; NALT; NALT ARX) zur Bestimmung einer geographischen Position (22) einer Mobilstation (MS 1), wobei das Lokalisierungsmittel (MBLT; NALT; NALT ARX) die Funkübertragung (21) zwischen mindestens einer Antenne (TRX 10) der ersten Mehrzahl von Kommunikationsfunkantennen (TRX10, TRX 11, TRX 12) und der Mobilstation (MS 1) benutzt, und einem Ausgabemittel (25) an der Mobilstation (MS 1) zur Ausgabe von Informationen (42) in Klartext entsprechend der geographischen Position (22) oder durch eine örtliche Karte, die von dem Ausgabemittel (25) angezeigt wird, wobei die geographische Position (22) von der Mobilstation (MS 1) durch Feldstärkenmessmittel in der Mobilstation (MS 1) bestimmt wird, um empfangene Feldstärken einer Kommunikationsfunkantenne (TRX 10) einer dienenden Funkzelle (01) und mindestens einer Kommunikationsfunkantenne (TRX 11) einer benachbarten Funkzelle, angrenzend an die dienende Funkzelle, zu bestimmen,
und **dadurch gekennzeichnet, dass**
das Mobiltelefonnetzsystem (20) weiterhin unterstützende Empfangsantennen (RX 1, RX 2) als zusätzliche nur-empfangende Antennen zur Bestimmung von Parametern für einen zeitlichen Vorlauf (TA) der Mobilstation (MS 1) aufweist,
wobei die Parameter für den zeitlichen Vorlauf (TA) durch die unterstützende Empfangsantennen (RX 1, RX 2) gemessen werden, um der Mobilstation (MS 1) zu ermöglichen, die geographische Position (22) der Mobilstation (MS 1) zu bestimmen, wobei die geographische Position (22) von der Mobilstation mit zeitlichen Vorlaufwerte berechnet wird, die von den zusätzlichen unterstützenden Empfangsantennen (RX 1, RX 2) gegeben werden.

8. Eine Mobilstation (MS 1) eines Mobiltelefonnetzsystem (20), mit einer ersten Mehrzahl von Kommunikationsfunkantennen (TRX10, TRX 11, TRX 12), die zur Kommunikation mit einer zweiten Mehrzahl von Mobilstationen (MS 1, MS 2) durch Funkübertragung (21) geeignet sind, einem Lokalisierungsmittel (MBLT; NALT; NALT ARX) zur Bestimmung einer geographischen Position (22) der Mobilstation (MS 1), wobei das Lokalisierungsmittel (MBLT; NALT; NALT ARX) die Funkübertragung (21) zwischen mindestens einer Antenne (TRX 10) der ersten Mehrzahl von Kommunikationsfunkantennen (TRX10, TRX 11, TRX 12) und der Mobilstation (MS 1) benutzt, und einem Ausgabemittel (25) an der Mobilstation (MS 1) zur Ausgabe von Informationen in Klartext entsprechend der geographischen Position (22) oder durch eine örtliche Karte, die von dem Ausgabemittel (25) angezeigt wird, wobei die geographische Position (22) von der Mobilstation (MS 1) durch Feldstärkenmessmittel in der Mobilstation (MS 1) bestimmt wird, um empfangene Feldstärken einer Kommunikationsfunkantenne (TRX 10) einer dienenden Funkzelle (01) und mindestens einer Kommunikationsfunkantenne einer benachbarten Funkzelle, angrenzend an die dienende Funkzelle, zu bestimmen,
und **dadurch gekennzeichnet, dass**
das Mobiltelefonnetzsystem (20) weiterhin unterstützende Empfangsantennen (RX 1, RX 2) als zusätzliche nur-empfangende Antennen zur Bestimmung von Parametern für einen zeitlichen Vorlauf (TA) der Mobilstation (MS 1) aufweist,
wobei die Parameter für den zeitlichen Vorlauf (TA) durch die unterstützende Empfangsantennen (RX 1, RX 2) gemessen werden, um der Mobilstation (MS 1) zu ermöglichen, die geographische Position (22) der Mobilstation (MS 1) zu bestimmen, wobei die geographische Position (22) von der Mobilstation mit zeitlichen Vorlaufwerte berechnet wird, die von den zusätzlichen unterstützenden Empfangsantennen (RX 1, RX 2) gegeben werden.

## Revendications

1. Système de réseau téléphonique mobile (20) comprenant une première pluralité d'antennes de communication radio (TRX 10, TRX 11, TRX 12) adaptées à communiquer en utilisant une transmission radio (21) avec une seconde pluralité de stations mobiles (MS1, MS2), comprenant des moyens de localisation (MBLT ; NALT ; NALT_ARX) pour déterminer une position géographique (22) d'une station mobile (MS1), lesdits moyens de localisation (MBLT ; NALT ; NALT_ARX) utilisant ladite transmission radio (21) entre au moins une antenne (TRX 10) de ladite première pluralité d'antennes (TRX 10, TRX 11, TRX 12) et ladite station mobile (MS1), et des moyens de sortie (25) à ladite station mobile (MS1) pour sortir une information (42) correspondant à ladite position géographique (22) sous forme de simple texte ou en utilisant une carte locale affichée par lesdits moyens de sortie (25), ladite position géographique (22) étant calculée par ladite station mobile (MS1) en utilisant des moyens de mesure d'intensité de champ qui sont compris dans ladite station mobile (MS1) pour mesurer les intensités du champ reçu d'une antenne de communication radio (TRX 10) d'une cellule serveuse (01) et d'au moins une antenne de communication radio (TRX 11) d'une cellule voisine (03) adjacente à ladite cellule serveuse (01), et
**caractérisé en ce que**
ledit système de réseau (20) comprend en outre des antennes réceptrices d'assistance (RX1, RX2) à titre d'antennes supplémentaires uniquement de réception pour mesurer des paramètres d'avance temporelle (TA) de ladite station mobile (MS1),
dans lequel les paramètres d'avance temporelle (TA) sont mesurés en utilisant les antennes réceptrices d'assistance (RX1, RX2) afin d'être capable de déterminer la position géographique (22) de la station mobile (MS1) par ladite station mobile (MS1), ladite position géographique (22) étant calculée par ladite station mobile en utilisant des valeurs d'avance temporelle données par les antennes réceptrices d'assistance (RX1, RX2) supplémentaires.

2. Système selon la revendication 1, **caractérisé en ce que** ladite information (42) concernant ladite position géographique (22) est indépendante de l'information spécifique à un utilisateur de ladite station mobile (MS1) et indépendante d'un code de composition dudit système de réseau téléphonique (20).

3. Système selon l'une des revendications 1 ou 2, **caractérisé en ce que** des tables de racines de noms de zones géographiques (TRNZG) et/ou des tables de cartographie de zones géographiques (TCZG) sont susceptibles d'être chargées dans ladite station mobile (MS1) par au moins d'un appel d'un service de réseau, ou sont rendues disponibles par un module mémoire embrochable à ladite station mobile (MS1).

4. Système selon l'une des revendications 1 à 3, **caractérisé en ce que** ladite information (42) concernant ladite position géographique (22) peut être envoyée par ladite station mobile (MS1) via un service de messagerie (SMS), périodiquement, automatiquement lors d'un événement prédéterminé, et/ou manuellement, comme en appelant et/ou par appel des racines de noms de zones géographiques (RNZG).

5. Système selon l'une des revendications 1 à 4, **caractérisé en ce que** ladite information (42) concernant ladite position géographique (22) peut être envoyée par ladite station mobile (MS1) via une procédure de détermination par appel téléphonique normal, comme en appelant et/ou par appel des racines de noms de zones géographiques (RNZG), en addition ou en substitution d'une présentation d'un appel et d'un service à numéro d'appel.

6. Système selon l'une des revendications 1 à 5, **caractérisé en ce que** ladite information (42) concernant ladite position géographique (22) est utilisée à titre de détermination de trajet et/ou pour un service de navigation automatique pour un utilisateur de ladite station mobile (MS1) comprenant des moyens pour déterminer et pour stocker des changements de position de ladite station mobile (MS1) par référence à des tables de racines de noms de zones de localisation (RNZL), des tables de racines de noms de cellules (TRNC), des tables de racines de noms de zones géographiques (TRNZG) et/ou des tables de cartographie de zones géographiques (TCZG), et des moyens pour guider ledit utilisateur de ladite station mobile (MS1).

7. Procédé de fonctionnement d'un système de réseau téléphonique mobile (20) comprenant une première pluralité d'antennes de communication radio (TRX 10, TRX 11, TRX 12) adaptées à communiquer en utilisant une transmission radio (21) avec une seconde pluralité de stations mobiles (MS1, MS2), comprenant des moyens de localisation (MBLT ; NALT ; NALT_ARX) pour déterminer une position géographique (22) d'une station mobile (MS1), lesdits moyens de localisation (MBLT ; NALT ; NALT_ARX) utilisant ladite transmission radio (21) entre au moins une antenne (TRX 10) de ladite première pluralité d'antennes (TRX 10, TRX 11, TRX 12) et ladite station mobile (MS1), et des moyens de sortie (25) à ladite station mobile (MS1) pour sortir une information (42) correspondant à ladite position géographique (22) sous forme de simple texte ou en utilisant une carte locale affichée par lesdits moyens de sortie (25),
ladite position géographique (22) est calculée par ladite station mobile (MS1) en utilisant des moyens de mesure d'intensité de champ compris dans ladite station mobile (MS1) pour mesurer des intensités de champ reçues d'une antenne de communication radio (TRX 10) d'une cellule serveuse (01) et d'au moins une antenne de communication radio (TRX 11) d'une cellule voisine (03) adjacente à ladite cellule serveuse (01), et
**caractérisé en ce que**
ledit système de réseau (20) comprend en outre des antennes réceptrices d'assistance (RX1, RX2) à titre d'antennes supplémentaires uniquement de réception pour mesurer des paramètres d'avance temporelle (TA) de ladite station mobile (MS1),
dans lequel les paramètres d'avance temporelle (TA) sont mesurés en utilisant les antennes réceptrices d'assistance (RX1, RX2) afin d'être capable de déterminer la position géographique (22) de la station mobile (MS1) par ladite station mobile (MS1),
dans lequel la position géographique (22) est calculée par ladite station mobile en utilisant des valeurs d'avance temporelle données par les antennes réceptrices d'assistance (RX1, RX2) supplémentaires.

8. Station mobile d'un système de réseau téléphonique mobile (20) comprenant une première pluralité d'antennes de communication radio (TRX 10, TRX 11, TRX 12) adaptées à communiquer en utilisant une transmission radio (21) avec une seconde pluralité de stations mobiles (MS1, MS2), comprenant des moyens de localisation (MBLT ; NALT ; NALT_ARX) pour déterminer une position géographique (22) d'une station mobile (MS1), lesdits moyens de localisation (MBLT ; NALT ; NALT_ARX) utilisant ladite transmission radio (21) entre au moins une antenne (TRX 10) de ladite première pluralité d'antennes (TRX 10, TRX 11, TRX 12) et ladite station mobile (MS1), et des moyens de sortie (25) à ladite station mobile (MS1) pour sortir une information (42) correspondant à ladite position géographique (22) sous forme de simple texte ou en utilisant une carte locale affichée par lesdits moyens de sortie (25),
ladite position géographique (22) est calculée par ladite station mobile (MS1) en utilisant des moyens de mesure d'intensité de champ compris dans ladite station mobile (MS1) pour mesurer des intensités de champ reçues d'une antenne de communication radio (TRX 10) d'une cellule serveuse (01) et d'au moins une antenne de communication radio (TRX 11) d'une cellule voisine (03) adjacente à ladite cellule serveuse (01), et
**caractérisée en ce que**
ledit système de réseau (20) comprend en outre des antennes réceptrices d'assistance (RX1, RX2) à titre d'antennes supplémentaires uniquement de réception pour mesurer des paramètres d'avance temporelle (TA) de ladite station mobile (MS1),
dans lequel les paramètres d'avance temporelle (TA) sont mesurés en utilisant les antennes réceptrices d'assistance (RX1, RX2) afin d'être capable de déterminer la position géographique (22) de la station mobile (MS1) par ladite station mobile (MS1),
dans lequel la position géographique (22) est calculée par ladite station mobile en utilisant des valeurs d'avance temporelle données par les antennes réceptrices d'assistance (RX1, RX2) supplémentaires.
